# EUROPEAN PATENT SPECIFICATION

(11) **EP 4 113 756 B1**
(45) Date of publication and mention of the grant of the patent: **04.11.2026**
(21) Application number: 21919919.7
(22) Date of filing: 21.12.2021
(51) Int. Cl.: H01R 13/58, H01M 50/284, H01M 50/247, H01M 50/296, H02J 7/70, H01R 13/11, H01R 12/71, H02J 7/00

(54) **BATTERY PACK INCLUDING MEMBER CAPABLE OF PREVENTING POOR CONTACT WITH DEVICE**
BATTERIEPACK MIT ELEMENT ZUR VERHINDERUNG VON KONTAKTFEHLERN MIT EINER VORRICHTUNG
BLOC-BATTERIE COMPRENANT UN ÉLÉMENT APTE À EMPÊCHER UNE DÉFAILLANCE DE CONTACT AVEC UN DISPOSITIF

(30) Priority: 12.01.2021 KR 20210004205
(43) Date of publication of application: 04.01.2023
(73) Proprietor: LG Energy Solution, Ltd., Seoul 07335 (KR)
(72) Inventor: SON, Hyuk Joon, Daejeon 34122 (KR); LEE, Jin Hyun, Daejeon 34122 (KR); JANG, Jae Young, Daejeon 34122 (KR); KIM, Jae Hyung, Daejeon 34122 (KR); JUNG, Dae Ho, Daejeon 34122 (KR)
(74) Representative: Plasseraud IP
(86) International application number: PCT/KR2021/019544
(87) International publication number: WO 2022/154295

(56) References cited:
- EP-A2- 3 660 951
- KR-A- 20100 123 067
- KR-A- 20140 082 271
- KR-B1- 101 798 525
- KR-B1- 102 099 704
- US-A1- 2008 153 359
- US-A1- 2013 089 756
- US-A1- 2013 154 565

## Description

### [Technical Field]

The present invention relates to a battery pack including a support member provided around a connector, thereby preventing poor contact with a device pin due to deformation of the connector.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS).

There are a lithium ion battery, a lithium polymer battery, a nickel-cadmium battery, a nickel-hydride battery, and a nickel-zinc battery as secondary batteries that are widely used at present. The operating voltage of a unit secondary battery cell, i.e. a unit battery cell, is about 2.0V to 5.0V. In the case in which output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. In general, a battery pack is manufactured using at least one battery module by adding an additional component.

The battery pack may be electrically connected to various devices through a connector.

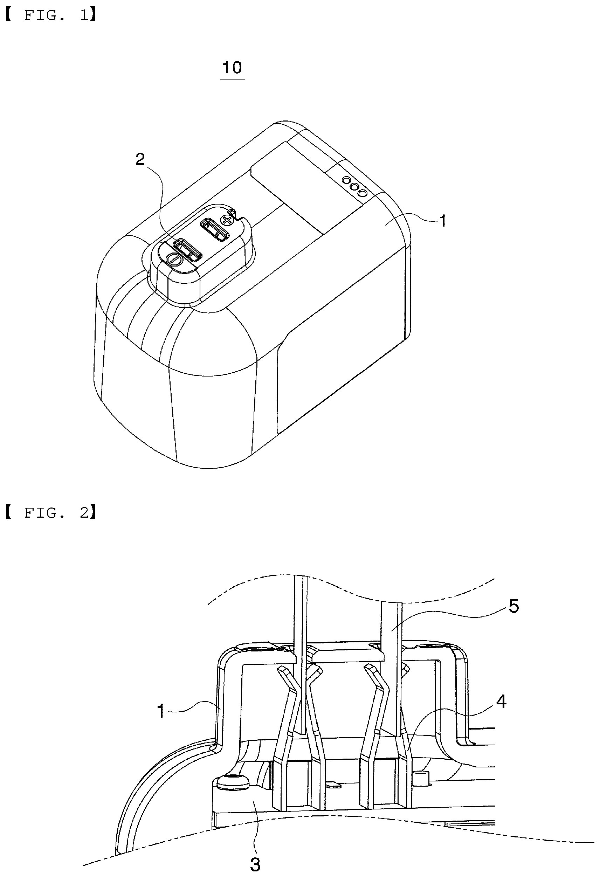

FIG. 1 is a perspective view schematically showing a portion of a conventional battery pack, and FIG. 2 is a perspective view schematically showing the section of a conventional connector into which a device pin is inserted.

When describing the structure of the connector configured to connect the conventional battery pack and a device to each other with reference to FIGS. 1 and 2, the battery pack is configured to have a structure in which one or more battery modules or battery cells are received in a case.

The case generally includes a lower case and an upper cover 1, wherein a pin insertion port 2, into which a device pin 5 configured to electrically connect a device that uses the battery pack as a power supply and the battery pack to each other is inserted, is formed in the upper cover 1.

In addition, a printed circuit board (PCB) 3 having parts configured to control operation of the battery pack mounted thereon and a connector 4, coupled to the PCB 3, for electrical connection with an external device are provided in the battery pack.

In order to electrically connect the battery pack to the device, the device pin 5 is inserted into the connector through the pin insertion port 2 in order to form a contact point. For the connector of the conventional battery pack, however, deformation, such as widening, of the contact point may occur when insertion and separation of the device pin 5 are repeated, whereby poor contact between the connector and the device pin 5 inserted into the connector may occur.

When such poor contact occurs, contact resistance may be increased, whereby heat may be generated or the device may malfunction.

Examples of background art can be found in EP3660951A2, US2013/154565A1, and US2013/089756A1. US2013/154565A1 discloses the preamble of claim 1.

### [Disclosure]

### [Technical Problem]

The present invention has been made in view of the above problems, and it is an object of the present invention to provide a battery pack including a support member provided around a connector, thereby preventing poor contact with a device pin due to deformation of the connector.

### [Technical Solution]

In order to accomplish the above object, a battery pack according to the independent claim 1.

Also, in the battery pack according to the present invention, the support member may be provided at each pin insertion port.

Also, in the battery pack according to the present invention, a distance between the pair of bars of the support member may be set such that a portion of each of the pair of connector arms contacts an inside of the support member in the state in which the device pin is inserted therebetween, thereby restricting a widening between the pair of connector arms.

Also, in the battery pack according to the present invention, one surface of the protrusion may contact the connector arm when the device pin is inserted into the connector.

Also, in the battery pack according to the present invention, the support member may be made of an elastic material.

Also, in the battery pack according to the present invention, a distance between the pair of bars of the support member may be set such that a portion of each of the pair of connector arms contacts at least one of an inside of the support member and the protrusion in the state in which the device pin is inserted therebetween, thereby restricting a widening between the pair of connector arms.

In addition, the present invention provides a device including the battery pack according to the present invention.

### [Advantageous Effects]

A battery pack according to the present invention has an advantage in that a support member capable of restricting deformation of a connector is provided, whereby it is possible to prevent poor contact between the connector and a device pin.

In addition, the battery pack according to the present invention has an advantage in that electrical contact between the connector and the device pin is satisfactorily maintained despite repeated use, whereby long-term use is possible without poor contact.

In addition, the battery pack according to the present invention has an advantage in that malfunction of a device due to poor contact is reduced, whereby product reliability is improved.

### [Description of Drawings]

FIG. 1 is a perspective view schematically showing a portion of a conventional battery pack.
FIG. 2 is a perspective view schematically showing the section of a conventional connector into which a device pin is inserted.
FIG. 3 is a perspective view schematically showing a portion of the section of a battery pack including a support member that is not according to the claimed invention.
FIG. 4 is a perspective view schematically showing a portion of the section of the battery pack including the support member that is not according to the claimed invention in the state in which a device pin is inserted into the battery pack.
FIG. 5 is a perspective view schematically showing a portion of the section of a battery pack including a support member according to the claimed invention.
FIG. 6 is a perspective view schematically showing a portion of the section of the battery pack including the support member according to the claimed invention in the state in which a device pin is inserted into the battery pack.
FIGS. 7 and 8 are perspective views schematically showing a process of inserting a connector between the support members according to the claimed present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack according to the present invention will be described with reference to the accompanying drawings.

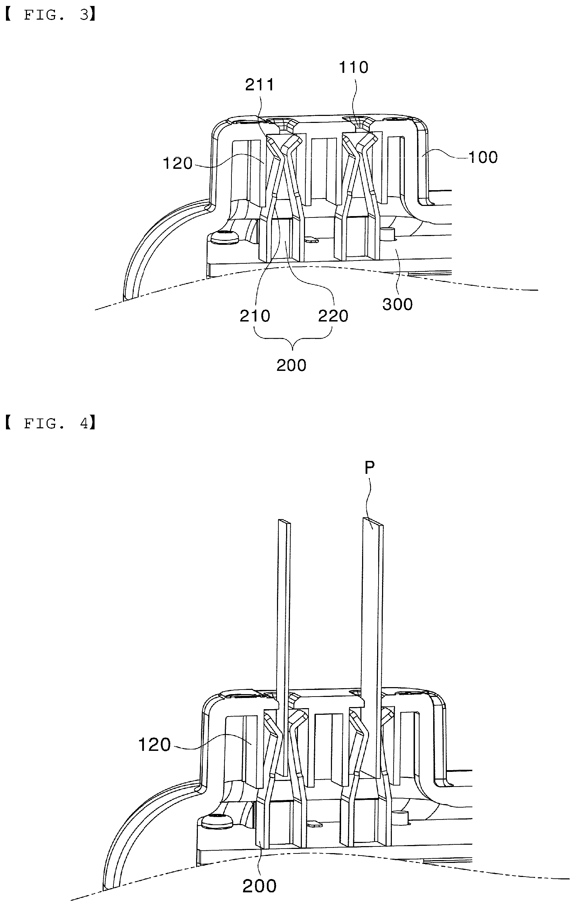

FIG. 3 is a perspective view schematically showing a portion of the section of a battery pack including a support member, and FIG. 4 is a perspective view schematically showing a portion of the section of the battery pack including the support member in the state in which a device pin is inserted into the battery pack.

When describing the battery pack with reference to FIGS. 3 and 4, the battery pack is configured such that a plurality of battery cells is received in a pack case including an upper cover 100 and a lower case.

The kind of a battery cell receivable in the pack case is not particularly restricted, and any one of various known battery cells, such as a pouch-shaped battery cell, a cylindrical battery cell, and a prismatic battery cell, may be appropriately used as needed. Depending on circumstances, a plurality of battery cells may be manufactured in the form of a battery module, and may be received in the pack case.

In addition, a printed circuit board (PCB) 300 having various parts configured to control operation of the battery pack mounted thereon is provided at one side of the pack case in the pack case, and a connector 200 for electrical connection with an external device is joined to one surface of the PCB 300.

Here, as shown in FIG. 3, the connector 200 includes a pair of connector arms 210 bent inwards at a point between opposite ends of each thereof so as to form a contact point with a device pin P and a connector connection portion 220 having one end connected to the pair of connector arms 210 and the other end coupled to the PCB 300.

In addition, each of the pair of connector arms 210 is a long plate that is made of an electrically conductive material, such as metal, and that is bent at a point thereof. The distance between the connector arms 210 is gradually decreased with increasing distance from the portions of the connector arm abutting the connector connection portion 220, and the distance between the connector arms 210 is gradually increased from the bent points thereof in a direction toward connector arm distal ends 211.

Meanwhile, the upper cover 100 is provided at a position thereof corresponding to each connector 200 with a pin insertion port 110, through which the device pin P is inserted into the connector 200.

In addition, the upper cover 100 is provided at an inside thereof with a support member 120 configured to prevent poor contact between the connector 200 and the device pin P due to deformation of the connector 200, which may be caused as the result of repeated insertion and separation of the device pin P.

The support member 120 is configured such that a pair of bar-shaped members is located so as to face each other in the state in which a pin insertion port 110 is located therebetween for each connector 200. One side of each support member 120 is connected to an inside of the upper cover 100, and the other side of each support member is formed so as to extend in a direction toward the PCB 300.

When the battery pack including the connector 200 is assembled using the upper cover 100 having the connector 200 provided between the support members 120, as described above, each connector 200 is located between the pair of support members 120.

In the state in which the device pin P is not inserted into the connector 200, the distance between the pair of support members 120 is greater than the distance between the two connector arm distal ends 211. In the state in which the device pin P is inserted into the connector 200, as shown in FIG. 4, the two connector arm distal ends 211 have a distance therebetween to such an extent that the two connector arm distal ends come into contact with the support members 120.

In general, when the device pin P is inserted into the connector 200, the connector arms 210 press the device pin P due to elasticity thereof, whereby contact therebetween is stably maintained.

When the connector 200 is deformed due to repeated use, however, the connector 200 cannot stably hold the device pin P, whereby poor contact therebetween occurs. In order to solve this problem, the support members 120 are provided at the upper cover 100.

That is, in the state in which the device pin P is inserted into the connector 200, the two connector arm distal ends 211 are prevented from being spaced apart from each other by a predetermined distance or more by the support members 120, whereby contact between the connector 200 and the device pin P is stably maintained.

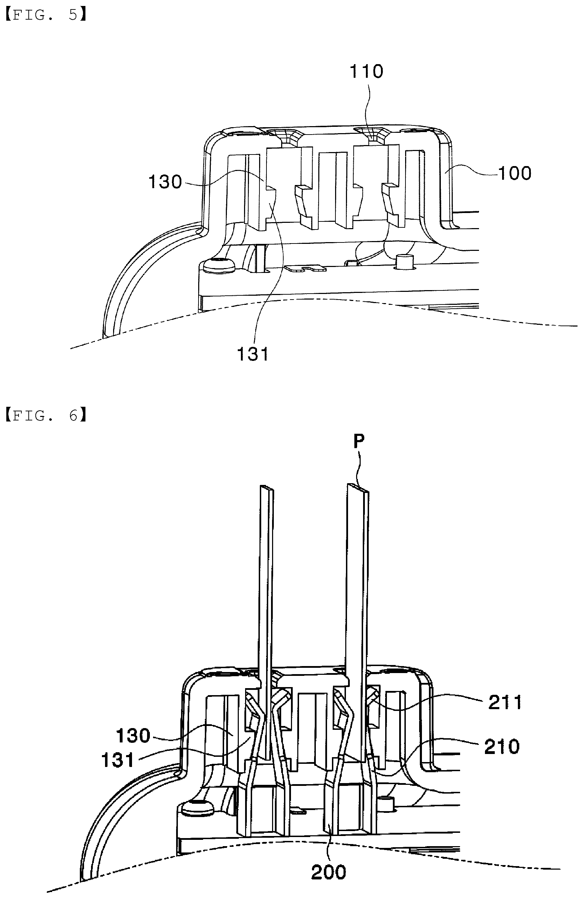

Meanwhile, FIG. 5 is a perspective view schematically showing a portion of the section of a battery pack including a support member according to the present invention, and FIG. 6 is a perspective view schematically showing a portion of the section of the battery pack including the support member according to the present invention in the state in which a device pin is inserted into the battery pack.

When describing the support member 130 according to the independent claim 1 of the present invention in detail with reference to FIGS. 5 and 6, the support member 130 includes a protrusion 131 protruding inwards therefrom.

Here, "inwards" means between a pair of support members 130, into which a connector 200 is inserted.

In the case in which the device pin P is inserted into the connector 200 located between the support members 130 each having the protrusion 131, as described above, distal ends of connector arms 210 come into contact with insides of the support members 130, whereby the distal ends of connector arms 210 are prevented from being spaced apart from each other by a predetermined distance or more. Furthermore, the connector arms 210 come into contact with the protrusions 131, whereby the connector arms are prevented from being spaced apart from each other by a predetermined distance or more. Consequently, it is possible to prevent poor contact due to deformation of the connector 200.

The distance between the pair of support members 130 may be formed so as to be equal to the distance between the support members 120 of FIGS. 3 and 4, previously described.

When the distance between the pair of support members 130 is set, as described above, and the size and shape of each protrusion 131 are appropriately designed, the connector arm distal ends 211 contact the support members 130, and at the same time the connector arms 210 contact the protrusions 131, whereby the connector 200 may be prevented from being widened more than necessary.

Meanwhile, contact between the support members 130 and the connector arm distal ends 211 may be performed first or contact between the protrusions 131 and the connector arms 210 may be performed first depending on the distance between the pair of support members 130 and the size and shape of each protrusion 131.

In any case, widening of the connector 200 may be restricted through at least one contact, and therefore it is possible to prevent poor contact between the connector 200 and the device pin P.

Meanwhile, as shown in FIG. 6, the shape of each protrusion 131 is configured such that one surface of each protrusion that contacts a corresponding one of the connector arms 210 is inclined. At this time, it is preferable for the inclination angle of the protrusion to be equal to the inclination angle of the connector arm 210 that contacts the protrusion.

When one surface of the protrusion 131 is formed so as to have the same inclination angle as the connector arm 210, as described above, there is an advantage in that the protrusion can contact the connector arm 210 over a wide area.

However, the shape of the protrusion 131 is not limited thereto, and may be selected within a range within which the protrusion can contact the connector arm 210 when the device pin P is inserted, whereby it is possible to prevent widening between the connector arms 210.

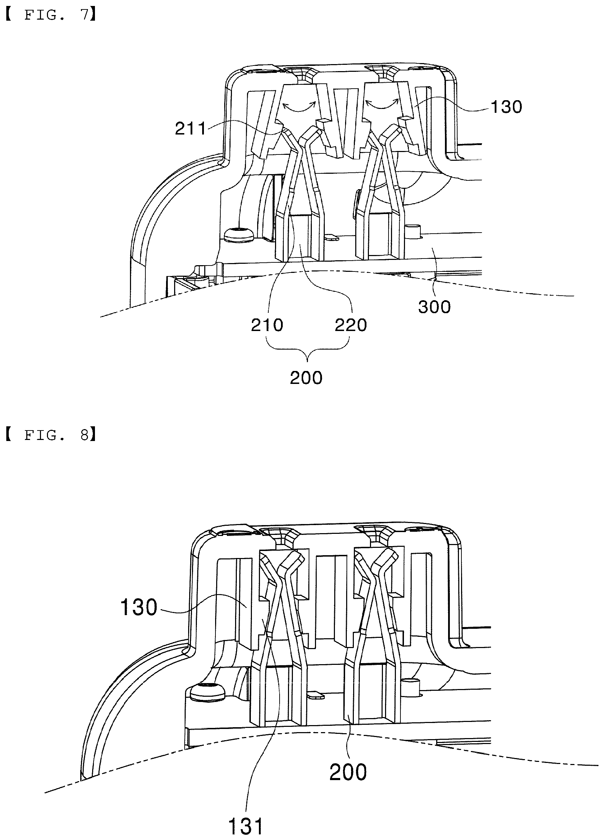

FIGS. 7 and 8 are perspective views schematically showing a process of inserting the connector between the support members according to the present invention.

When describing the process of inserting the connector 200 between the support members 130 having the protrusions 131 at the time of assembly of the battery pack with reference to FIGS. 7 and 8, the distance between the support members 130 is increased when the connector arms 210 pass between the protrusions 131 having a small distance therebetween, whereby the connector can be inserted between the support members, since each support member 130 is made of an elastic material and only one side of the support member is fixed to the upper cover 100.

Here, the elastic member is not particularly restricted, and various known materials may be used. However, it is preferable for the support member to be made of the same material as the upper cover 100 to which the support member is coupled or a material capable of easily being joined to the upper cover.

The support members 130 may be integrally formed at the upper cover 100 at the time of manufacture, or may be separately manufactured and then joined to the upper cover 100 using various known methods.

In the battery pack according to the present invention, it is possible to prevent poor contact between the connector 200 and the device pin P due to repeated use simply by adding a simple construction, such as the support members 120 or 130, to the upper cover 100, as described above, and therefore it is possible to increase lifespan of the battery pack.

In addition, when the battery pack is applied to various devices, it is possible to improve product reliability due to defect reduction.

Although the specific details of the present invention have been described in detail, the present invention is defined by the scope of the appended claims.

### (Description of Reference Symbols)

- 100:: Upper cover
- 110:: Pin insertion port
- 120, 130:: Support members
- 131:: Protrusion
- 200:: Connector
- 210:: Connector arm
- 211:: Connector arm distal end
- 220:: Connector connection portion
- 300:: PCB
- P:: Device pin

## Claims

1. A battery pack comprising:
a plurality of battery cells;
a pack case configured to receive the plurality of battery cells therein, the pack case comprising a lower case and an upper cover (100);
a connector (200) located in the pack case, the connector (200) being configured to electrically connect the battery pack to a device ; and
a printed circuit board, PCB, (300) located in the pack case, the connector (200) being coupled to one surface of the PCB (300),
wherein the upper cover (100) includes a plurality of pin insertion ports (110) configured to allow a device pin (P) to be inserted into the connector (200) therethrough,
wherein the upper cover (100) is provided at an inside thereof with a support member (130) located outside the connector (200), the support member (130) being configured to restrict deformation of the connector (200),
wherein the connector (200) comprises a pair of connector arms (210) bent inwards at predetermined points so as to each form a contact point with the device pin (P), and a connector connection portion (220) having one side connected to the pair of connector arms (210) and another side coupled to the PCB (300),
wherein one side of the support member (130) is directly connected to an inside of the upper cover (100), and the other side of the support member (130) extends in a direction toward the PCB (300),
wherein the support member (130) is constituted by a pair of bar-shaped members located so as to face each other in a state in which the pin insertion port (110) is located therebetween,
**characterized in that**
each bar-shaped member has a protrusion (131) formed so as to protrude in an area between the pair of bar-shaped members and configured to contact a corresponding one of the connector arms (210),
and **in that** a surface of each protrusion (131) that is configured to contact the corresponding one of the connector arms (210) is inclined.

2. The battery pack according to claim 1, wherein the support member (130) is provided at each pin insertion port (110).

3. The battery pack according to claim 1, wherein a distance between the pair of bar-shaped members of the support member (130) is set such that a portion of each of the pair of connector arms (210) contacts an inside of the support member (130) in a state in which the device pin (P) is inserted therebetween, thereby restricting a widening between the pair of connector arms (210).

4. The battery pack according to claim 1, wherein each protrusion (131) is formed so as to protrude in a direction toward a corresponding one of the pair of connector arms (210).

5. The battery pack according to claim 4, wherein one surface of the protrusion (131) contacts the connector arm (210) when the device pin (P) is inserted into the connector (200).

6. The battery pack according to claim 4, wherein the support member (130) is made of an elastic material.

7. The battery pack according to claim 4, wherein a distance between the pair of bar-shaped members of the support member (130) is set such that a portion of each of the pair of connector arms (210) contacts at least one of an inside of the support member (130) and the protrusion (131) in a state in which the device pin (P) is inserted therebetween, thereby restricting a widening between the pair of connector arms (210).

8. A device comprising the battery pack according to any one of claims 1 to 7.

## Patentansprüche

1. Batteriepack, umfassend:
eine Vielzahl von Batteriezellen;
ein Packgehäuse, das konfiguriert ist, um die Vielzahl von Batteriezellen darin aufzunehmen, wobei das Packgehäuse ein unteres Gehäuse und eine obere Abdeckung (100) umfasst;
einen Verbinder (200), der sich im Packgehäuse befindet, wobei der Verbinder (200) konfiguriert ist, um den Batteriepack elektrisch mit einer Vorrichtung zu verbinden; und
eine Leiterplatte, PCB, (300), die sich im Packgehäuse befindet, wobei der Verbinder (200) mit einer Oberfläche der PCB (300) gekoppelt ist,
wobei die obere Abdeckung (100) eine Vielzahl von Stifteinführungsöffnungen (110) aufweist, die konfiguriert sind, um zu ermöglichen, dass ein Vorrichtungsstift (P) durch diese hindurch in den Verbinder (200) eingeführt wird,
wobei die obere Abdeckung (100) an ihrer Innenseite mit einem Stützelement (130) versehen ist, das sich außerhalb des Verbinders (200) befindet, wobei das Stützelement (130) konfiguriert ist, um die Verformung des Verbinders (200) zu beschränken,
wobei der Verbinder (200) ein Paar von Verbinderarmen (210), die an vorbestimmten Punkten nach innen gebogen sind, um jeweils einen Kontaktpunkt mit dem Vorrichtungsstift (P) zu bilden, und einen Verbinderverbindungsabschnitt (220) umfasst, der mit einer Seite mit dem Paar von Verbinderarmen (210) und mit einer anderen Seite mit der PCB (300) verbunden ist,
wobei eine Seite des Stützelements (130) direkt mit einer Innenseite der oberen Abdeckung (100) verbunden ist und die andere Seite des Stützelements (130) sich in eine Richtung zur PCB (300) erstreckt,
wobei das Stützelement (130) aus einem Paar stabförmiger Elemente gebildet ist, die so angeordnet sind, dass sie einander in einem Zustand zugewandt sind, in dem die Stifteinführungsöffnung (110) dazwischen angeordnet ist,
**dadurch gekennzeichnet, dass** jedes stabförmige Element einen Vorsprung (131) aufweist, der so ausgebildet ist, dass er in einem Bereich zwischen dem Paar stabförmiger Elemente vorsteht und konfiguriert ist, um einen entsprechenden der Verbinderarme (210) zu berühren,
und dadurch, dass eine Oberfläche jedes Vorsprungs (131), die konfiguriert ist, um den entsprechenden der Verbinderarme (210) zu berühren, geneigt ist.

2. Batteriepack nach Anspruch 1, wobei das Stützelement (130) an jeder Stifteinführungsöffnung (110) vorgesehen ist.

3. Batteriepack nach Anspruch 1, wobei ein Abstand zwischen dem Paar stabförmiger Elemente des Stützelements (130) so eingestellt ist, dass ein Teil jedes des Paars von Verbinderarmen (210) ein Inneres des Stützelements (130) in einem Zustand berührt, in dem der Vorrichtungsstift (P) dazwischen eingeführt ist, wodurch eine Aufweitung zwischen dem Paar von Verbinderarmen (210) beschränkt wird.

4. Batteriepack nach Anspruch 1, wobei jeder Vorsprung (131) so ausgebildet ist, dass er in eine Richtung zu einem entsprechenden des Paars von Verbinderarmen (210) vorsteht.

5. Batteriepack nach Anspruch 4, wobei eine Oberfläche des Vorsprungs (131) den Verbinderarm (210) berührt, wenn der Vorrichtungsstift (P) in den Verbinder (200) eingeführt wird.

6. Batteriepack nach Anspruch 4, wobei das Stützelement (130) aus einem elastischen Material hergestellt ist.

7. Batteriepack nach Anspruch 4, wobei ein Abstand zwischen dem Paar stabförmiger Elemente des Stützelements (130) so eingestellt ist, dass ein Teil jedes des Paars von Verbinderarmen (210) mindestens eines von einem Inneren des Stützelements (130) und dem Vorsprung (131) in einem Zustand berührt, in dem der Vorrichtungsstift (P) dazwischen eingeführt ist, wodurch eine Aufweitung zwischen dem Paar von Verbinderarmen (210) beschränkt wird.

8. Vorrichtung, umfassend den Batteriepack nach einem der Ansprüche 1 bis 7.

## Revendications

1. Bloc-batterie comprenant :
une pluralité de cellules de batterie ;
un boîtier de bloc configuré pour recevoir la pluralité de cellules de batterie en son sein, le boîtier de bloc comprenant un boîtier inférieur et un couvercle supérieur (100) ;
un connecteur (200) situé dans le boîtier de bloc, le connecteur (200) étant configuré pour connecter électriquement le bloc-batterie à un dispositif ; et
une carte de circuit imprimé, PCB, (300) située dans le boîtier de bloc, le connecteur (200) étant couplé à une surface de la PCB (300),
dans lequel le couvercle supérieur (100) comprend une pluralité d'orifices d'insertion de broche (110) configurés pour permettre à une broche de dispositif (P) d'être insérée dans le connecteur (200) à travers ceux-ci,
dans lequel le couvercle supérieur (100) est pourvu à l'intérieur d'un élément de support (130) situé à l'extérieur du connecteur (200), l'élément de support (130) étant configuré pour limiter la déformation du connecteur (200),
dans lequel le connecteur (200) comprend une paire de bras de connecteur (210) pliés vers l'intérieur en des points prédéterminés de manière à former chacun un point de contact avec la broche de dispositif (P), et une partie de connexion de connecteur (220) ayant un côté connecté à la paire de bras de connecteur (210) et un autre côté connecté à la PCB (300),
dans lequel un côté de l'élément de support (130) est directement connecté à un intérieur du couvercle supérieur (100), et l'autre côté de l'élément de support (130) s'étend dans une direction vers la PCB (300),
dans lequel l'élément de support (130) est constitué d'une paire d'éléments en forme de barre situés de manière à se faire face dans un état où l'orifice d'insertion de broche (110) est situé entre eux,
**caractérisé en ce que** chaque élément en forme de barre a une saillie (131) formée de manière à faire saillie dans une zone entre la paire d'éléments en forme de barre et configurée pour entrer en contact avec un bras correspondant des bras de connecteur (210),
et **en ce qu'**une surface de chaque saillie (131) qui est configurée pour entrer en contact avec le bras correspondant des bras de connecteur (210) est inclinée.

2. Le bloc-batterie selon la revendication 1, dans lequel l'élément de support (130) est prévu au niveau de chaque orifice d'insertion de broche (110).

3. Le bloc-batterie selon la revendication 1, dans lequel une distance entre la paire d'éléments en forme de barre de l'élément de support (130) est réglée de telle sorte qu'une partie de chacun de la paire de bras de connecteur (210) entre en contact avec un intérieur de l'élément de support (130) dans un état où la broche de dispositif (P) est insérée entre eux, limitant ainsi un élargissement entre la paire de bras de connecteur (210).

4. Le bloc-batterie selon la revendication 1, dans lequel chaque saillie (131) est formée de manière à faire saillie dans une direction vers un bras correspondant de la paire de bras de connecteur (210).

5. Le bloc-batterie selon la revendication 4, dans lequel une surface de la saillie (131) entre en contact avec le bras de connecteur (210) lorsque la broche de dispositif (P) est insérée dans le connecteur (200).

6. Le bloc-batterie selon la revendication 4, dans lequel l'élément de support (130) est constitué d'un matériau élastique.

7. Le bloc-batterie selon la revendication 4, dans lequel une distance entre la paire d'éléments en forme de barre de l'élément de support (130) est réglée de telle sorte qu'une partie de chacun de la paire de bras de connecteur (210) entre en contact avec au moins l'un d'un intérieur de l'élément de support (130) et de la saillie (131) dans un état où la broche de dispositif (P) est insérée entre eux, limitant ainsi un élargissement entre la paire de bras de connecteur (210).

8. Dispositif comprenant le bloc-batterie selon l'une quelconque des revendications 1 à 7.
